# EUROPÄISCHE PATENTSCHRIFT

(11) **EP 0 920 798 B1**
(45) Veröffentlichungstag und Bekanntmachung des Hinweises auf die Patenterteilung: **30.10.2002**
(21) Anmeldenummer: 98122824.0
(22) Anmeldetag: 01.12.1998
(51) Int. Cl.: A01D 34/71

(54) **Vorrichtung, Auswurfgehäuse und Mähgerät**
Mower discharge arrangement
Arrangement de décharge pour tondeuse

(30) Priorität: 08.12.1997 US 987884
(43) Veröffentlichungstag der Anmeldung: 09.06.1999
(73) Patentinhaber: DEERE & COMPANY, Moline, Illinois 61265-8098 (US)
(72) Erfinder: Benway, Randy Edward, Horicon, Wisconsin 53032 (US)
(74) Vertreter: Magin, Ludwig Bernhard

(56) Entgegenhaltungen:
- DE-A- 2 331 508
- FR-A- 2 280 309
- US-A- 3 797 214
- US-A- 4 158 279
- US-A- 4 726 178
- US-A- 5 003 757
- US-A- 5 189 870
- US-A- 5 195 311

## Beschreibung

Die Erfindung betrifft eine Vorrichtung zum Stützen zumindest einer beweglich an einem Mähwerk anbringbaren und zumindest bereichsweise flexiblen Klappe, ein Auswurfgehäuse und ein Mähgerät.

Solch eine Vorrichtung ist aus der US-Patentanmeldung US-5 195 311 bekannt.

Bekannte Mähgeräte weisen ein Mähwerk auf, in dem mehrere Mähmesser rotieren, um Gras und anderen Pflanzenwuchs zu schneiden. Das Mähwerk weist oftmals eine Seitenauswurföffnung auf, die in die Seite des Mähwerks eingebracht ist, und.die es von den Mähmessern geschnittenen Pflanzenabschnitten erlaubt, das Mähwerk zu der Seite hin zu verlassen, um auf dem Rasen abgelegt zu werden. Diese Mähgeräte weisen üblicherweise eine große Kunststoffauswurfklappe auf, die sich von der Auswurföffnung nach außen erstreckt. Die Klappe leitet das geschnittene Material nach unten in den Rasen und hilft zu verhindern, daß Pflanzenabschnitte und andere Dinge nach oben geworfen werden, wenn sie das Mähwerk verlassen.

Die US-A-3,805,499 zeigt einen Rasenmäher mit einer gelenkig an dem Rasenmähergehäuse montierten Klappe und einem Grasfangsack, der Pflanzenabschnitte, die das Rasenmähergehäuse durch eine Auswurföffnung verlassen, auffängt. Die Klappe ist zwischen einer unteren Stellung, in der die Pflanzenabschnitte nach unten abgelenkt werden, und einer angehobenen Stellung, in der sich die Klappe außerhalb des Bereichs des an dem Mäher angebauten Grasfangsacks befindet, verschwenkbar. An dem Grasfangsack ist ein Stützelement vorgesehen, das an der Klappe angreift und diese aus dem Bereich des angebauten Grasfangsacks hält. Das Stützelement ist flexibel, um es dem schwenkbar an dem Mäher angebrachten Grasfangsack zu erlauben, beim Auftreffen auf ein Hindernis zu verschwenken.

Die US-A-3,797,214 zeigt einen Aufsitzmäher mit einer Klappe und einem Grasfangsack, der an ein an dem Aufsitzmäher angebautes Mähwerk angeschlossen werden kann. Die Klappe kann eine abgesenkte und eine angehobene Stellung einnehmen, wobei sich die Klappe in der angehobenen Stellung, die sie einnimmt, wenn der Grasfangsack an dem Aufsitzmäher angebaut ist, auf einem an einem Anschlußstück des Grasfangsacks vorgesehenen Griff abstützt.

In beiden Schriften werden Klappen gezeigt, die so stabil und steif ausgeführt sind, daß sie sich bei dem Aufstützen auf dem jeweils gezeigten Stützelement nicht bleibend verformen. Solche Klappen können beim Auftreffen auf ein Hindernis beschädigt werden, da sie nur im Rahmen der an ihnen vorgesehenen federbelasteten Befestigung verschwenken können. Der Einsatz flexibler Klappen in Verbindung mit den gezeigten Stützvorrichtungen kann zu bleibenden Verformungen der Klappen führen, insbesondere wenn die Klappen sich über längere Zeit auf dem jeweiligen Stützelement aufstützen.

Das der Erfindung zugrunde liegende Problem wird in der nicht optimalen Ausführung bekannter Abstützungen für Klappen und der mit ihnen ausgestatteten Geräte und Komponenten gesehen.

Dieses Problem wird erfindungsgemäß durch die Lehre der Patentansprüche 1, 7 und 8 gelöst, wobei in den weiteren Patentansprüchen die Lösung in vorteilhafter Weise weiterentwickelnde Merkmale aufgeführt sind.

Eine erfindungsgemäße Vorrichtung wirkt zumindest mit einer beweglich an einem Mähwerk anbringbaren und zumindest bereichsweise flexiblen Klappe zusammen. Die Klappe kann als Auswurfklappe ausgeführt sein, die beispielsweise von dem Mähdeck abgeworfenes Mähgut in eine geeignete Richtung lenkt. Die Klappe kann aber auch in Form einer Abdeckklappe für eine beliebige Baugruppe wie beispielsweise für Antriebskomponenten wie Riemen oder Riemenscheiben oder für eine Wartungsöffnung ausgebildet sein. Die Klappe kann dabei einteilig oder mehrteilig ausgeführt sein und nur aus einem oder mehreren Materialien bestehen. Zumindest ein Bereich der Klappe ist dabei so ausgeführt, daß er elastisch verformbar ist und kann aus einem metallischen Werkstoff beispielsweise in der Art eines dünnen Blechs bestehen; vorzugsweise ist die Klappe zumindest bereichsweise aus einem Kunststoff, vorzugsweise einem Thermoplast, gefertigt. Die Klappe kann zumindest eine Stellung einnehmen, in der sie sich flächig oder punktuell auf der Vorrichtung gegen die Wirkung wenigstens einer Kraft in der Art abstützt, daß ihre Elastizitätsgrenze im wesentlichen nicht überschritten wird. Die Kraft kann zum einen die Gewichtskraft der Klappe sein. Es können aber auch Kräfte, die unabhängig von oder zusätzlich zu der Gewichtskraft auftreten, an der Klappe angreifen, wie beispielsweise Federkräfte, durch Verspannen etc. auftretende Kräfte oder Gewichtskräfte zusätzlicher Bauelemente. Die Klappe verformt sich während des Abstützens, bei dem sie beispielsweise durch ihre Gewichtskraft oder auch durch zusätzliche Kräfte, wie Federkräften u.ä. belastet wird, nur elastisch, so daß sie ihre ursprüngliche Gestalt wieder einnehmen kann, wenn sie sich nicht auf der Vorrichtung abstützt. Es tritt keine dauerhafte bzw. plastische Verformung der flexiblen Bereiche der Klappe auf. Eine solche Abstützung kann beispielsweise dadurch erreicht werden, daß sich die Klappe über eine ausreichend große Fläche auf der Vorrichtung abstützt. Diese Fläche kann zusammenhängend also flächig vorgesehen sein oder aber in zwei oder mehrere einzelne Abstützflächen aufgeteilt sein und daher punktuell abstützen. Es erfolgt aber in keinem Fall eine konzentrierte Krafteinleitung, so daß es zu keinem bleibenden Verbiegen oder Verziehen der Klappe, das zu einer Beschädigung und damit zu einer mangelhaften Funktionserfüllung der Klappe führen kann, kommen kann.

Die Klappe ist an dem Mähwerk vorgesehen und dient dazu, von dem Mähwerk ausgeworfene Pflanzenabschnitte daran zu hindern, eine Auswurföffnung des Mähwerks unkontrolliert zu verlassen. Die Klappe lenkt die Pflanzenabschnitte in eine Richtung, in der sie sich nicht nachteilig auf den Betrieb bzw. die Betriebssicherheit des Mähgeräts auswirken. Die Klappe kann sich beispielsweise bezogen auf die übliche Mährichtung des Mähgeräts vor oder rückwärtig der Auswurföffnung befinden, vorzugsweise ist sie aber zumindest bereichsweise oberhalb der Auswurföffnung angeordnet, so daß sie die abgeworfenen Pflanzenabschnitte nach unten vorzugsweise zur Ablage auf den Boden leitet.

Die Klappe kann zumindest zwei Stellungen aufweisen. Eine untere Stellung, in der die Klappe in einem Auswurfmodus aus dem Mähwerk austretende Pflanzenabschnitte nach außen in den Rasen leitet, und eine obere Stellung, in der an die Auswurföffnung zumindest ein Auswurfgehäuse anschließbar ist, das beispielsweise die ausgeworfenen Pflanzenabschnitte zu einem Sammelbehälter leitet. Es ist auch denkbar, daß anstatt des Auswurfgehäuses ein Schutz oder ein Gehäuse, das anderen Funktionen dient, vorgesehen ist. Umfaßt die Vorrichtung wenigstens ein Stützmittel, das an dem Auswurfgehäuse vorgesehen ist, so kann die Klappe in ihrer oberen Stellung auf dem Stützmittel aufliegen. Es ist nicht erforderlich, daß das Stützmittel im Auswurfmodus an dem Mähgerät verbleibt, wodurch ein Verschmutzen oder Verkleben beispielsweise mit feuchten Pflanzenabschnitten oder sonstigem Material verhindert wird. Das Stützmittel kann fest oder lösbar mit dem Auswurfgehäuse verbunden sein, beispielsweise kann es über ein Scharnier an ihm angelenkt sein und nur nach erfolgtem Anbauen des Auswurfgehäuses zum Abstützen der Klappe in seine Betriebsstellung geklappt werden. Es ist auch denkbar, das Stützmittel als einen separaten Teil vorzusehen, der nur nach erfolgtem Anbauen des Auswurfgehäuses auf diesem aufgesetzt oder allgemein angebracht wird. Vorzugsweise ist das Stützmittel in das Auswurfgehäuse eingeformt. Übliche Auswurfgehäuse bestehen aus Kunststoffmaterial. Vorzugsweise kann das Stützmittel in die Herstellungsform des Auswurfgehäuses integriert werden, wodurch ein zusätzlicher Teil bzw. ein weiterer Arbeitsgang vermieden werden kann.

Umfaßt die Vorrichtung einen verschwenkbaren Schwenkteil, der zumindest abschnittsweise oberhalb der Auswurföffnung angeordnet ist, so kann dieser Schwenkteil die Auswurföffnung in einer unteren Stellung im Auswurfmodus zumindest teilweise verschließen. Die Pflanzenabschnitte werden vorzugsweise in einen seitlichen Bereich der Auswurföffnung gelenkt, über den sie auf dem Rasen abgelegt werden. Im Auswurfmodus kann die Klappe in einer hochgeklappten bzw. oberen Stellung einen oberen Bereich der Auswurföffnung in der Oberseite des Mähwerks freigeben, über den die Pflanzenabschnitte in das Auswurfgehäuse abgeworfen werden können. Dieser Schwenkteil besteht vorzugsweise aus einem steiferen Material als die Klappe, beispielsweise einem Metallmaterial. Ist die Klappe in dieser oberen Stellung zwischen dem Stützmittel und der Klappe angeordnet, so stützt sich die Klappe über den Schwenkteil auf dem Stützmittel ab. Der Schwenkteil kann unterschiedlich einteilig oder mehrteilig und auch als durchbrochene Struktur beispielsweise in der Art eines Rechens oder fingerartig ausgebildet sein. Besonders günstig ist es aber, wenn er in der Art einer vorzugsweise geschlossenen Abdeckung ausgeführt ist.

Weist der Schwenkteil eine höhere Elastizitätsgrenze auf als die Klappe, d.h. ist der Schwenkteil steifer bzw. weniger biegsam als die Klappe, so kann es ausreichend sein, wenn die Stützvorrichtung nur ein einzelnes Stützmittel oder ein Stützmittel mit nur einer verhältnismäßig kleinen Auflagefläche zum Abstützen des Schwenkteils aufweist. Die Krafteinleitung in die biegsamere Klappe erfolgt über den steiferen Schwenkteil, der die Klappe punktuell oder flächig abstützt, so daß es zu keiner Deformation oder dauerhaften Verformung der Klappe kommt.

Um die Klappe und/oder den Schwenkteil in ihrer vorzugsweise unteren Stellung, in der sie Pflanzenabschnitte in den Rasen lenken, zu halten, können diese beispielsweise durch die Wirkung einer Feder in Richtung dieser unteren Stellung belastet werden. Es ist auch eine feste Verrastung oder Festlegung der Klappe bzw. des Schwenkteils denkbar. Eine federnde Belastung ermöglicht ein Auslenken beim Auftreffen auf ein Hindernis und ein anschließendes Zurückkehren in die Ausgangsstellung und ein Vermeiden von Beschädigungen.

Ist ein Auswurfgehäuse so ausgebildet, daß es ein Stützmittel zum Stützen zumindest einer beweglich an einem Mähwerk anbringbaren und zumindest bereichsweise flexiblen Klappe, aufweist, wobei die Klappe zumindest eine Stellung einnehmen kann, in der das Stützmittel die Klappe derart flächig oder punktuell gegen die Wirkung wenigstens einer Kraft abstützt, daß die Elastizitätsgrenze der Klappe im wesentlichen nicht überschritten wird, so kann ein in üblicher Weise ausgeführtes Mähwerk, das die zuvor beschriebenen Nachteile aufweist, durch ein solches Auswurfgehäuse ergänzt werden, wodurch ein Verformen oder Verziehen einer bereits vorhandenen Klappe nach dem Anbauen eines erfindungsgemäßen Auswurfgehäuses verhindert werden kann.

Es ist günstig, ein Mähgerät, vorzugsweise ein Gerät zur Rasenpflege, mit einer erfindungsgemäßen Vorrichtung bzw. mit einem erfindungsgemäßen Auswurfgehäuse auszustatten. Solche Geräte können beispielsweise Rasentraktoren, Aufsitzmäher oder handgeschobene oder handgeführte Rasenmäher sein.

In der Zeichnung sind zwei nachfolgend näher beschriebene Ausführungsbeispiele der Erfindung dargestellt. Es zeigt:
- Fig. 1: ein Mähwerk mit einer Klappe in einer Seitenauswurfstellung,
- Fig. 2: das Mähwerk aus Fig. 1 mit der Klappe in einer hochgeklappten Stellung, in der ein Schwenkteil sichtbar wird,
- Fig. 3: das Mähwerk mit sowohl einer hochgeklappten Klappe als auch mit einem hochgeklappten Schwenkteil und mit einem Auswurfgehäuse, das sich an eine nun freigegebene Auswurföffnung in dem Mähwerk anschließt,
- Fig. 4: das Mähwerk mit dem angeschlossenen Auswurfgehäuse, wobei der Schwenkteil auf einem Stützmittel aufliegt,
- Fig. 5: eine rückwärtige Ansicht des Mähwerks mit dem Schwenkteil und dem angeschlossenen Auswurfgehäuse und
- Fig. 6: die in Fig. 4 gezeigte Ansicht mit einem alternativ ausgeführten Stützmittel.

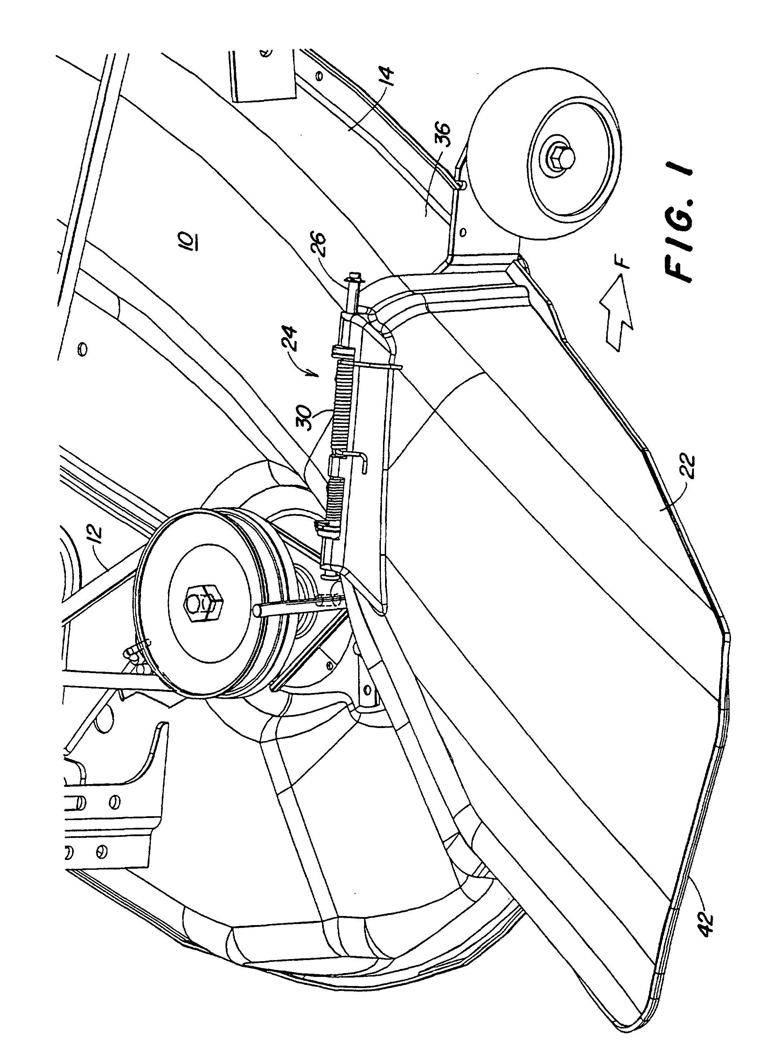

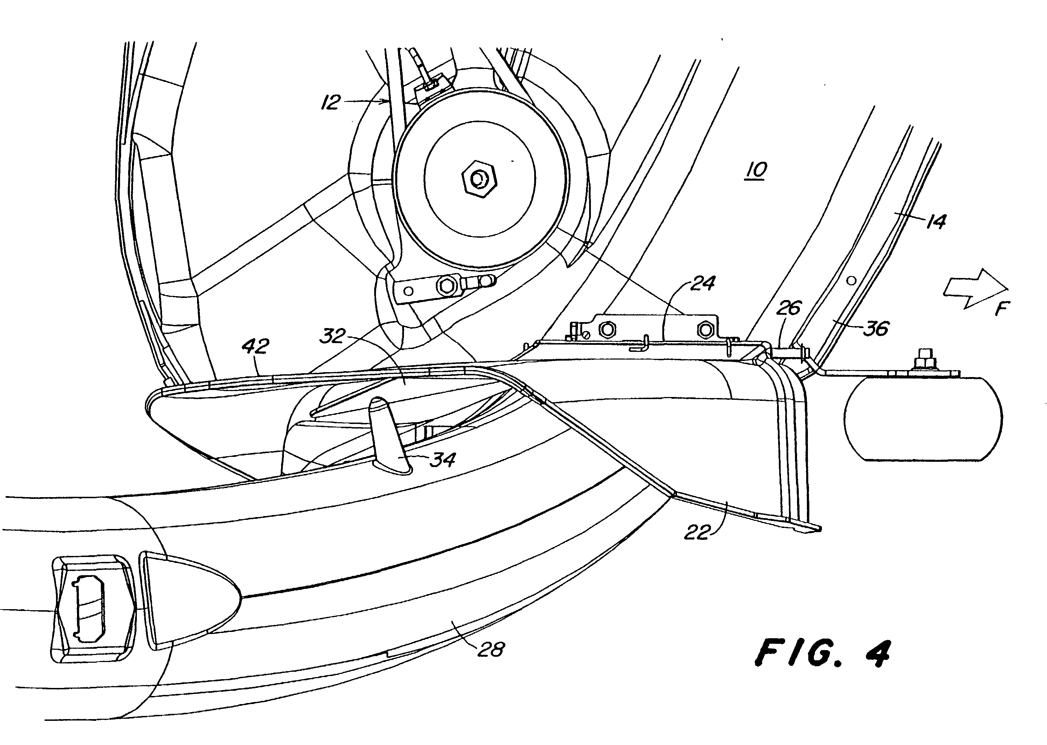

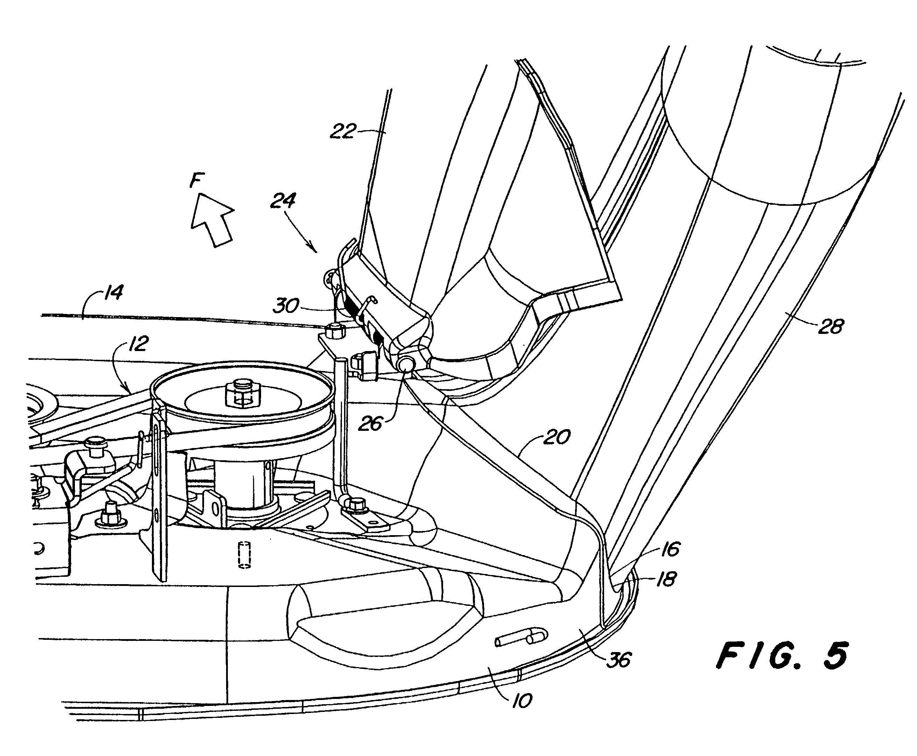

In den Figuren 1 - 6 wird ein Mähwerk 10 gezeigt, das angepaßt ist, um von einem Mähgerät getragen zu werden. Nicht gezeigte Mähmesser rotieren im Uhrzeigerdrehsinn innerhalb des Mähwerks 10, um Gras und Pflanzen zu schneiden. Die Mähmesser werden durch ein Riemensystem 12 angetrieben, das seinen Rotationsantrieb von einer Ausgangswelle eines Fahrzeugmotors erhält. Die Mähmesser beinhalten voreilende Schneidkanten, die das Gras und die übrige Vegetation schneiden. Nach oben gerichtete Flügelbereiche der Mähmesser sind hinter den Schneidkanten angeordnet und dienen dazu, einen Auftrieb innerhalb des Mähwerks 10 zu erzeugen, der Pflanzenabschnitte nach oben bläst, und drehen sich in einem vorderen Bereich 14 des Mähwerks 10 in Richtung der rechten Seite des Mähwerks 10 bezogen auf die Vorwärtsfahrtrichtung.

Das Mähwerk 10 beinhaltet eine Auswurföffnung 16, durch die Pflanzenabschnitte das Mähwerk 10 verlassen. Die Auswurföffnung 16 beinhaltet einen Seitenbereich 18, durch den sich die Pflanzenabschnitte während eines Seitenauswurfmodus bewegen, und einen Deckbereich 20, durch den sich die Pflanzenabschnitte bei einem Betrieb in einem Aufsammelmodus bewegen, wie es im folgenden genauer beschrieben wird.

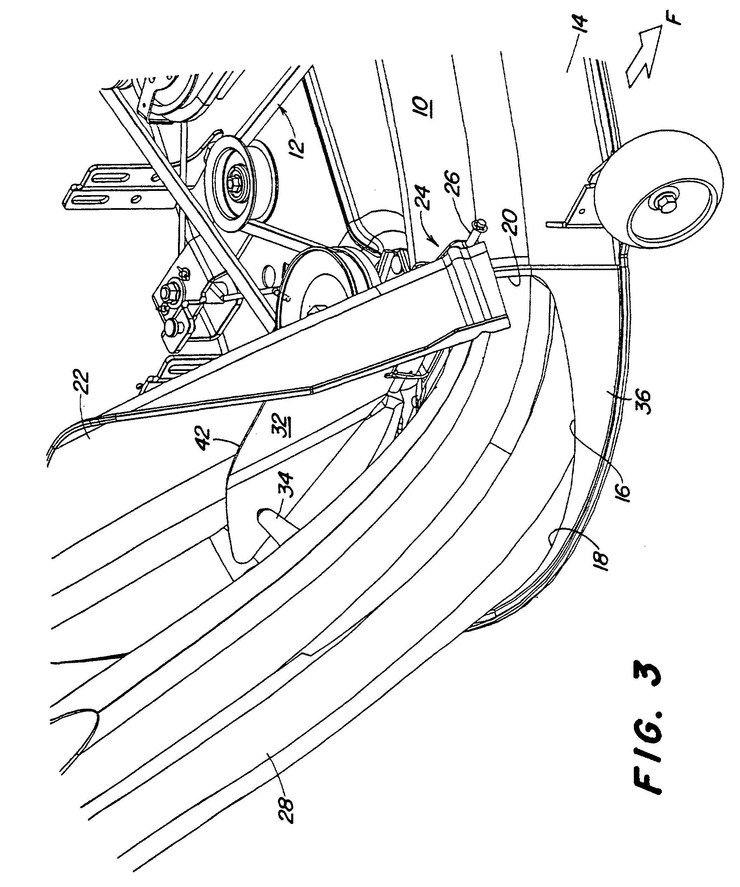

Eine Klappe 22 aus Kunststoff ist in der Nähe der Auswurföffnung 16 angeordnet. Die Klappe 22 ist mit dem Mähwerk 10 über einen Gelenkmechanismus 24 verbunden, der es der Klappe 22 erlaubt, zwischen einer ersten und einer zweiten Stellung zu schwenken. In der ersten Stellung ist die Klappe 22, wie es in Figur 1 gezeigt wird, heruntergeklappt, wobei die Klappe 22 Pflanzenabschnitte nach unten in den Rasen lenkt, wenn die Pflanzenabschnitte durch den Seitenbereich 18 der Auswurföffnung 16 nach außen getrieben werden. In der ersten Stellung hält die Klappe 22 Pflanzenabschnitte und andere Objekte davon ab, nach oben geworfen zu werden, wenn sie während des Mähbetriebs in dem Seitenauswurfmodus durch die Auswurföffnung 16 gelangen. Der Gelenkmechanismus 24 bildet eine Achse 26, um die die Klappe 22 von der ersten Stellung in die Stellung, wie in den Figuren 3 - 5 dargestellt, verschwenken kann, in der die Klappe 22 Raum zum Anbringen eines Auswurfgehäuses 28 in der Auswurföffnung 16 zur Verfügung stellt. Eine vorspannende Feder 30 greift an der Klappe 22 an und belastet die Klappe 22 nach unten in Richtung ihrer ersten Stellung.

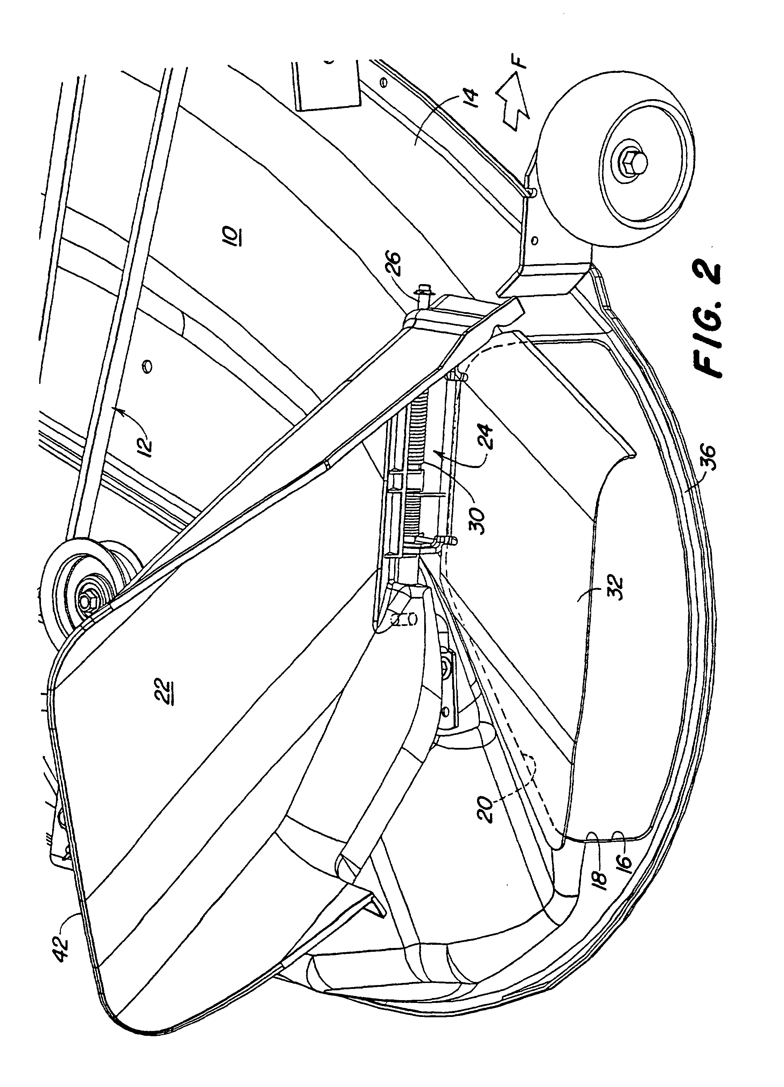

Ein Schwenkteil 32 ist direkt unterhalb der Klappe 22 angeordnet und erstreckt sich über den Deckbereich 20 der Auswurföffnung 16 in der in Figur 2 gezeigten Stellung, wenn ein Betrieb im Seitenauswurfmodus erfolgt. Der Schwenkteil 32 weist eine erste Stellung, wie sie in den Figuren 1 und 2 gezeigt ist, auf, in der der Deckbereich 20 der Auswurföffnung 16 im Seitenauswurfmodus abgedeckt und im allgemeinen verschlossen wird, und eine von der ersten Stellung nach oben verschwenkte zweite Stellung, wie sie in den Figuren 3 - 5 dargestellt ist, auf, in der der Deckbereich 20 der Auswurföffnung 16 im allgemeinen freigegeben ist, um Freiraum für das Auswurfgehäuse 28 während des Aufsammelmodus zur Verfügung zu stellen. Der Schwenkteil 32 besteht aus einem verhältnismäßig steifen Metallmaterial und ist an dem Mähwerk 10 über den Gelenkmechanismus 24 angebracht. Der Schwenkteil 32, die Klappe 22, der Gelenkmechanismus 24 und die Feder 30 werden in der US-Anmeldung mit der Seriennummer 08/867,364, angemeldet am 02. Juni 1997, deren Offenbarung hiermit durch das Zitat eingeschlossen wird, genau beschrieben.

Das Auswurfgehäuse 28 kann an der Auswurföffnung 16 angebracht werden, um das Mähgerät von dem Seitenauswurfmodus in einen Aufsammelmodus umzuwandeln. Das Auswurfgehäuse 28 nimmt Pflanzenabschnitte durch den Deckbereich 20 der Auswurföffnung 16 auf und führt sie in einen von dem Mähgerät getragenen Sack oder Sammelbehälter. Ein Stützmittel 34 erstreckt sich von dem Auswurfgehäuse 28 nach außen. Wenn das Auswurfgehäuse 28 während des Aufsammelmodus in der Auswurföffnung 16 angebracht ist, liegt der Schwenkteil 32 direkt an dem Stützmittel 34 an und wird durch dieses offen gehalten. Die Klappe 22 ist nach unten in Richtung ihrer geschlossenen ersten Stellung vorgespannt und wird durch Anlage an dem Schwenkteil 32 offengehalten, welcher wiederum durch das Stützmittel 34 offen gehalten wird. Dies wird im folgenden näher beschrieben.

Als nächstes wird die Wirkungsweise der vorliegenden Erfindung im Einzelnen beschrieben. Während eines Betriebs in dem Seitenauswurfmodus befinden sich der Schwenkteil 32 und die Klappe 22 in ihrer ersten, den Deckbereich 20 der Auswurföffnung 16 abdeckenden Stellung, und das Auswurfgehäuse 28 ist nicht mit dem Mähwerk 10 verbunden. Gras wird in dem vorderen Bereich 14 des Mähwerks 10 durch die im Uhrzeigerdrehsinn rotierenden Mähmesser geschnitten. Grasabschnitte, die in dem vorderen Bereich 14 des Mähwerks 10 geschnitten wurden, werden durch den durch die Flügelbereiche der Mähmesser erzeugten Zug nach oben und zu der rechten Seite 36 des Mähwerks 10 geführt. Wenn die Abschnitte sich zu der rechten Seite 36 des Mähwerks 10 bewegen, fliegen sie durch den Seitenbereich 18 der Auswurföffnung 16 und werden auf dem Boden an den Seiten des Mähwerks 10 abgelegt. Der Schwenkteil 32 verschließt im allgemeinen den Deckbereich 20 der Auswurföffnung 16 und hält Material davon ab, nach oben durch den Deckbereich 20 der Auswurföffnung 16 geworfen zu werden. Die Klappe 22 erstreckt sich seitlich nach außen zu den Seiten der Auswurföffnung 16 und verhindert, daß Material nach oben durch den Deckbereich 20 der Auswurföffnung 16 geworfen wird. Die Klappe 22 erstreckt sich seitlich nach außen zu den Seiten der Auswurföffnung 16 und hindert Pflanzenabschnitte oder anderes Material daran, nach oben geworfen zu werden, wenn sie den Seitenbereich 18 der Auswurföffnung 16 verlassen.

Wenn die Klappe 22 während des Mähbetriebs auf ein Hindernis trifft, so beispielsweise wenn nahe an einem Gebäude oder um einen Baum gemäht wird, erlaubt der Gelenkmechanismus 24 der Klappe 22 nach oben zu verschwenken, wenn die Klappe 22 auf das Hindernis trifft. Das Kunststoffmaterial der Klappe 22 erlaubt es der Klappe 22, sich zu verbiegen, wenn sie auf Hindernisse stößt. Sobald die Klappe 22 bei dem Kontakt mit dem Hindernis nach oben verschwenkt, bleibt der Schwenkteil 32 an seinem Platz über dem Deckbereich 20 der Auswurföffnung 16, um Pflanzenabschnitte und anderes Material daran zu hindern, nach oben durch den Deckbereich 20 der Auswurföffnung 16 zu gelangen, während die Klappe 22 sich in ihrer oberen Stellung befindet. Sobald die Klappe 22 von dem Hindernis befreit ist, unterstützt die Feder 30 die Klappe 22 darin, in ihre untere Stellung zurückzukehren.

Das Mähgerät kann von einem Seitenauswurfmodus in einen Aufsammelmodus umgerüstet werden. Um dies zu tun, unterbricht der Fahrzeugführer den Mähbetrieb und hebt, sobald die Mähmesser stillstehen, den Schwenkteil 32 und die Klappe 22 in ihre jeweilige zweite Stellung an. Das Auswurfgehäuse 28 wird dann in die Auswurföffnung 16 eingesetzt. Das Auswurfgehäuse 28 ist wirksam mit einem Sammelbehälter verbunden, so daß die Pflanzenabschnitte, die das Mähwerk 10 durch die Auswurföffnung 16 verlassen, durch das Auswurfgehäuse 28 in den von dem Fahrzeug getragenen Sammelbehälter geleitet werden. Wenn er mit Pflanzenabschnitten gefüllt ist, kann der Sammelbehälter zur Entsorgung der Grasabschnitte geleert werden.

Während des Aufsammelmodus liegt das Stützmittel 34, das sich nach außen von dem Auswurfgehäuse 28 erstreckt, an dem Schwenkteil 32 an. Der Schwenkteil 32 wird dabei durch das mit dem Auswurfgehäuse 28 fest verbundene Stützmittel 34 in seiner offenen zweiten Stellung gehalten. Der Schwenkteil 32 ist aus einem metallischen Material gefertigt, welches verhältnismäßig steif ist, und er wird seine ursprüngliche Form beibehalten, während er durch das Stützmittel 34 offen gehalten wird.

Während des Aufsammelmodus wird die Klappe 22 durch die Kraft, die auf die Klappe 22 durch die Feder 30 einwirkt, gegen den Schwenkteil 32 gedrückt. Die Klappe 22 wird durch die Anlage an dem Schwenkteil 32 offen in ihrer zweiten Stellung gehalten. Die Klappe 22, wie sie in den Figuren 1 - 5 gezeigt wird, berührt den Schwenkteil 32 über eine bedeutsame Länge, die sich im allgemeinen parallel zu der Schwenkachse des Gelenkmechanismus 24 erstreckt. Der Schwenkteil 32 liegt an der Klappe 22 über im allgmeinen die gesamte seitliche, äußere Kante 42 des Schwenkteils an. Die Klappe 22 ist aus einem Kunststoffmaterial hergestellt, das etwas flexibel ist. Der Klappe 22 ist es dabei gestattet, sich zu verbiegen, wenn ein Hindernis angestoßen wird. Da die Klappe 22 durch Berührung mit dem Schwenkteil 32 über eine bedeutende Distanz oder Gebiet in ihrer offenen zweiten Stellung gehalten wird, wird die auf die Klappe 22 ausgeübte Belastung über ein Gebiet verteilt oder gestreut, das groß genug ist, um allgemein die Klappe 22 an einem Verformen oder Verziehen zu hindern, während sie offen gehalten wird. Da die Klappe 22 während des Aufsammelmodus ihre ursprüngliche Form behält, wird sie in ihrer ursprünglichen Form sein, wenn das Mähgerät in seinen Seitenauswurfmodus zurückgebracht wird. Daher wird die Klappe 22, wenn sie in ihre erste Stellung zurückkehrt, in der sie sich nach außen von der Auswurföffnung 16, wie in Figur 1 gezeigt, erstreckt, eine Form aufweisen, die dazu geeignet ist, Material davon abzuhalten nach oben geworfen zu werden, nachdem es die Auswurföffnung 16 verlassen hat. Die Klappe 22 wird daher damit fortfahren, Pflanzenabschnitte und anderes Material nach unten in den Rasen zu lenken, wenn sie aus der Auswurföffnung 16 im Seitenauswurfmodus gefördert werden, selbst nachdem die Klappe 22 über lange Einsatzzeiträume im Aufsammelmodus in ihrer offenen zweiten Stellung gehalten wurde.

Das Stützmittel 34, das in den Figuren 3 - 5 gezeigt wird, ist in das Auswurfgehäuse 28 eingeformt. Das Auswurfgehäuse 28 und das Stützmittel 34 bestehen beide aus Kunststoff und das Stützmittel 34 wird daher im gleichen Herstellungsvorgang geformt, in dem das Auswurfgehäuse 28 geformt wird. Diese Bauart reduziert daher Herstellungs- und Montagekosten und vereinfacht allgemein den Aufbau.

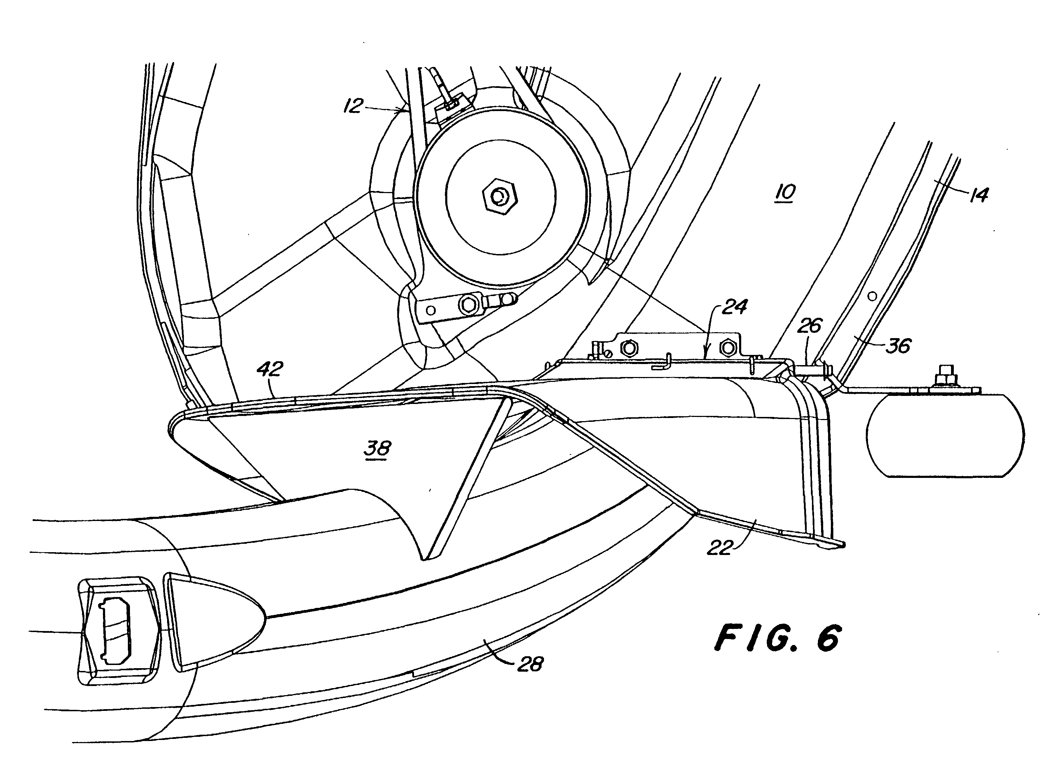

Bezugnehmend auf Figur 6 wird eine alternative Ausführungsform der vorliegenden Erfindung beschrieben. Das Stützmittel 38, das in Figur 6 gezeigt wird, ist so ausgebildet, daß es direkt an der Klappe 22 anliegt. Das Stützmittel 38 erstreckt sich über eine bedeutende Distanz, im allgemeinen über eine horizontale Ebene, um an der Klappe 22 entlang einer Mehrzahl von Punkten anzuliegen. Durch die Anlage der Klappe 22 über eine bedeutende Distanz in der in Figur 6 gezeigten Art, wird die Kraft, die von dem Stützmittel 38 in die Klappe 22 übertragen wird, in der Klappe 22 verteilt und gestreut. Die Streuung der Belastung trägt dazu bei, die Klappe 22 von einem Verformen oder Verziehen abzuhalten, wenn die Klappe 22 während des Auswurfmodus offen gehalten wird. Die vorliegende Erfindung beseitigt daher im allgemeinen hohe, örtlich beschränkte, in die Klappe 22 eingebrachte Belastungen, die verursachen könnten, daß die Klappe 22 sich verformt oder verzieht.

Die Stützmittel 34 und 38, die in den Figuren 1 - 6 gezeigt werden, sind nur zwei Ausführungsformen der vorliegenden Erfindung. Andere Formen und Anordnungen der Stützmittel 34, 38 können in Sinne der vorliegenden Erfindung benutzt werden. Beispielsweise können mehrere Fingerelemente oder Stützmittel 34, 38 vorgesehen sein, die an der Klappe 22 an einer Mehrzahl verschiedener Stellen anliegen, oder das Stützmittel 34, 38 kann eine Form zur Verfügung stellen, die eine Oberfläche aufweist, die an der Klappe 22 über ein verhältnismäßig großes Oberflächengebiet anliegt. Diese anderen erfindungsgemäßen Formen und Anordnungen des Stützmittels 34, 38 würden ebenso erlauben, daß die in die Klappe 22 durch die Stützmittel 34, 38 eingebrachte Belastung über die Klappe 22 verteilt oder gestreut wird, so daß hohe, örtlich begrenzte Kräfte ausgeschlossen werden. Wie zuvor beschrieben, hilft dies, die Tendenz der Klappe 22 sich zu verbiegen oder zu verziehen, zu reduzieren, wenn sie während des Aufsammelmodus offen gehalten wird, wodurch die Klappe 22 weiterhin ordnungsgemäß so funktionieren wird, daß Pflanzenabschnitte und Material nach unten geleitet werden, wenn sie die Auswurföffnung 16 im Seitenauswurfmodus verlassen, selbst dann wenn das Mähgerät über einen langen Zeitraum im Aufsammelmodus betrieben wurde.

## Patentansprüche

1. Vorrichtung zum Stützen zumindest einer beweglich an einem Mähwerk (10) anbringbaren und zumindest bereichsweise flexiblen Klappe (22), **dadurch gekennzeichnet, daß** die Klappe (22) zumindest eine Stellung einnehmen kann, in der die Vorrichtung die Klappe (22) derart flächig oder punktuell gegen die Wirkung wenigstens einer Kraft abstützt, daß die Elastizitätsgrenze der Klappe (22) im wesentlichen nicht überschritten wird.

2. Vorrichtung nach Anspruch 1, **dadurch gekennzeichnet, daß** die Klappe(22) zumindest abschnittsweise oberhalb einer an dem Mähwerk (10) vorgesehenen Auswurföffnung (16) angeordnet ist.

3. Vorrichtung nach einem oder mehreren der vorherigen Ansprüche, **dadurch gekennzeichnet, daß** die Vorrichtung wenigstens ein Stützmittel (34, 38) umfaßt, das vorzugsweise an wenigstens einem an dem Mähdeck (10) im Bereich der Auswurföffnung (16) anbringbaren Auswurfgehäuse (28) fest oder lösbar vorgesehen, vorzugsweise aber in das Auswurfgehäuse (28) eingeformt ist.

4. Vorrichtung nach Anspruch 3, **dadurch gekennzeichnet, daß** die Vorrichtung einen insbesondere als Abdeckung wirkenden Schwenkteil (32) umfaßt, der zumindest abschnittsweise oberhalb der Auswurföffnung (16) angeordnet ist und zumindest in einer Stellung einerseits an dem Stützmittel (34, 38) und andererseits an der Klappe (22) anliegt.

5. Vorrichtung nach Anspruch 4, **dadurch gekennzeichnet, daß** die Elastizitätsgrenze des Schwenkteils (32) zumindest bereichsweise größer ist als die Elastizitätsgrenze der Klappe (22).

6. Vorrichtung nach einem oder mehreren der vorherigen Ansprüche, **dadurch gekennzeichnet, daß** die Klappe (22) und/oder der Schwenkteil (32) vorzugsweise durch Federkraft in einer vorzugsweise unteren Stellung vorgespannt gehalten werden.

7. Auswurfgehäuse mit wenigstens einem Stützmittel (34, 38), insbesondere ausgebildet nach dem kennzeichnenden Teil des Anspruchs 3, zum Stützen zumindest einer beweglich an einem Mähwerk (10) anbringbaren und zumindest bereichsweise flexiblen Klappe (22), wobei die Klappe (22) zumindest eine Stellung einnehmen kann, in der das Stützmittel (34, 38) die Klappe (22) derart flächig oder punktuell gegen die Wirkung wenigstens einer Kraft abstützt, daß die Elastizitätsgrenze der Klappe (22) im wesentlichen nicht überschritten wird.

8. Mähgerät, vorzugsweise ein Gerät zur Rasenpflege, mit einer Vorrichtung nach einem oder mehreren der Ansprüche 1 bis 6 und/oder einem Auswurfgehäuse nach Anspruch 7.

## Claims

1. Apparatus for supporting at least one flap (22) which can be fitted movably on a mower mechanism (10) and is at least locally flexible, **characterized in that** the flap (22) can assume at least one position in which the apparatus so supports the flap (22) over an area or point-wise against the action of at least one force that the limit of elasticity of the flap (22) is essentially not exceeded.

2. Apparatus according to claim 1, **characterized in that** the flap (22) is arranged at least sectionally above an ejection opening (16) provided on the mower mechanism (10).

3. Apparatus according to one or more of the preceding claims, **characterized in that** the apparatus comprises at least one support means (34, 38), which is preferably provided fixedly or removably on at least one ejection casing (28) which can be fitted on the mower deck (10) in the region of the ejection opening (16), but is preferably shaped in the ejection casing (28).

4. Apparatus according to claim 3, **characterized in that** the apparatus comprises a pivoted part (32) acting in particular as a cover, which is arranged at least sectionally over the ejection opening (16) and bears at least in one position on one side on the support means (34, 38) and on the other side on the flap (22).

5. Apparatus according to claim 4, **characterized in that** the limit of elasticity of the pivoted part (32) is at least locally greater than the limit of elasticity of the flap (22).

6. Apparatus according to one or more of the preceding claims, **characterized in that** the flap (22) and/or the pivoted part (32) are held biased preferably by spring force in a preferably lower position.

7. An ejection casing with at least one support means (34, 38), especially formed according to the characterizing part of claim 3, for supporting at least one at least locally flexible flap (22) which can be fitted movably on a mower mechanism (10), wherein the flap (22) can assume at least one position in which the support means (34, 38) so support the flap (22) over an area or point-wise against the action of at least one force that the limit of elasticity of the flap (22) is essentially not exceeded.

8. A mower, preferably a mower for lawn care, with an apparatus according to one or more of claims 1 to 6 and/or an ejection casing according to claim 7.

## Revendications

1. Dispositif pour protéger au moins un volet (22) pouvant être monté de manière à être mobile sur une unité de coupe (10) et flexible au moins par endroits, **caractérisé en ce que** le volet (22) peut prendre au moins une position, dans laquelle le dispositif supporte le volet (22) selon une certaine surface ou ponctuellement à l'encontre de l'action d'au moins une force de telle sorte que la limite d'élasticité du volet (22) n'est essentiellement pas dépassée.

2. Dispositif selon la revendication 1, **caractérisé en ce que** le volet (22) est disposé au moins par endroits au-dessus d'une ouverture d'éjection (16) prévue sur l'unité de coupe (10).

3. Dispositif selon une ou plusieurs des revendications précédentes, **caractérisé en ce que** le dispositif comprend au moins un moyen de support (34,38), qui est prévu de façon fixe ou amovible de préférence sur un carter d'éjection (28) pouvant être monté sur l'unité de coupe (10) dans la zone de l'ouverture d'éjection (16), mais de préférence est formé dans le carter d'éjection (28).

4. Dispositif selon la revendication 3, **caractérisé en ce que** le dispositif comprend une partie pivotante (32), qui agit notamment en tant que capot et qui est disposée au moins par endroits au-dessus de l'ouverture d'éjection (16) et s'applique, au moins dans une position, d'une part contre le moyen de support (34,38) et d'autre part contre le volet (22).

5. Dispositif selon la revendication 4, **caractérisé en ce que** la limite d'élasticité de la partie pivotante (32) est supérieure, au moins par endroits, à la limite d'élasticité du volet (22).

6. Dispositif selon une ou plusieurs des revendications précédentes, **caractérisé en ce que** le volet (22) et/ou la partie pivotante (32) sont retenus à l'état pré-contraint de préférence par la force d'un ressort, dans une position de préférence inférieure.

7. Carter d'éjection comportant au moins un moyen de support (34,38), agencé notamment conformément à la partie caractéristique de la revendication 3, pour supporter au moins un volet (22) pouvant être monté de manière à être mobile sur une unité de coupe (10) et flexible au moins par endroits, et dans lequel le volet (22) peut prendre au moins une position, dans laquelle le moyen de support (34, 38) supporte le volet (22) selon une certaine surface ou ponctuellement à l'encontre de l'action d'au moins une force de telle sorte que la limite d'élasticité du volet (22) n'est essentiellement pas dépassée.

8. Tondeuse, de préférence appareil pour l'entretien du gazon, comportant un dispositif selon une ou plusieurs des revendications 1 à 6 et/ou carter d'éjection selon la revendication 7.
